# EUROPEAN PATENT APPLICATION

(11) **EP 4 697 757 A1**
(43) Date of publication of application: **18.02.2026**
(21) Application number: 23932376.9
(22) Date of filing: 10.04.2023
(51) Int. Cl.: H04S 7/00

(54) **AUDIO SIGNAL PROCESSING METHOD, AND APPARATUS**

(71) Applicant: Beijing Xiaomi Mobile Software Co., Ltd., Beijing 100085 (CN)
(72) Inventor: WANG, Bin, Beijing 100085 (CN)
(74) Representative: Gunzelmann, Rainer
(86) International application number: PCT/CN2023/087423
(87) International publication number: WO 2024/212076

(57) **Abstract**

Disclosed in embodiments of the present invention are an audio signal processing method, and an apparatus, applied to the technical field of communications. The method performed by a service device comprises: acquiring a current audio signal processing mode, the current audio signal processing mode being determined on the basis of at least one of a first performance parameter of a first terminal device, a second performance parameter of the service device, a third performance parameter of a second terminal device, an application scenario parameter of the first terminal device, and a preset rule; on the basis of the current audio signal processing mode, processing an audio signal to obtain first data; and sending the first data to the first terminal device or the second terminal device. The time delay from the time when a head tracking device in an XR device detects the head rotation and/or the position movement of a user to the time when the user feels the change of audio service can be reduced as much as possible, and the distribution of the function processing process required by the XR device for providing the XR audio service is balanced among all devices as much as possible.

## Description

### TECHNICAL FIELD

The disclosure relates to the field of communication technologies, and in particular to a method and an apparatus for processing an audio signal.

### BACKGROUND

With the development of communication technologies and extended reality (XR) technologies such as augmented reality (AR), virtual reality (VR), and mixed reality (MR), applications utilizing immersive audio services provided by XR devices are increasingly popular. A typical XR device (such as AR glasses) is strictly limited in its appearance, structure, weight, etc. for convenience of consumers to wear. Thus, to perform rendering and playback of audios on the XR device end, the whole process from decoding to binaural rendering for a received audio code stream signal needs to be reasonably allocated among the devices.

### SUMMARY

Embodiments of the disclosure provide a method and an apparatus for processing an audio signal. By adopting an audio signal processing mode that complies with a capability of a service device, a capability of a first terminal, a capability of a second terminal, and scenario requirements, not only the delay from user head rotation and/or position movement detected by a head tracker device in an extended reality (XR) device to the user perceived change in the audio service may be minimized, but also the allocation among all devices during a function processing procedure required for the XR device to provide the XR audio service may be balanced.

In a first aspect, embodiments of the disclosure provide a method for processing an audio signal. The method is performed by a service device, including: obtaining a current audio signal processing mode, in which the current audio signal processing mode is determined based on at least one of a first performance parameter of a first terminal, a second performance parameter of the service device, a third performance parameter of a second terminal, an application scenario parameter of the first terminal, or a preset rule; obtaining first data by processing an audio signal based on the current audio signal processing mode; and sending the first data to the first terminal or the second terminal, in which the first terminal is an audio playback device, the first terminal is connected to the service device via the second terminal, or the first terminal is directly connected to the service device.

In a second aspect, embodiments of the disclosure provide another method for processing an audio signal. The method is performed by a first terminal, including: obtaining a current audio signal processing mode, in which the current audio signal processing mode is determined based on at least one of a first performance parameter of the first terminal, a second performance parameter of a service device, a third performance parameter of a second terminal, an application scenario parameter of the first terminal, or a preset rule; and the first terminal is an audio playback device, the first terminal is connected to the service device via the second terminal, or the first terminal is directly connected to the service device; receiving first data, in which the first data is obtained by processing a first audio signal by the service device and/or the second terminal based on the current audio signal processing mode; obtaining a second audio signal to be played by processing the first data based on the current audio signal processing mode; and playing the second audio signal.

In a third aspect, embodiments of the disclosure provide a method for processing an audio signal. The method is performed by a second terminal, including: obtaining a current audio signal processing mode, in which the current audio signal processing mode is determined based on at least one of a first performance parameter of a first terminal, a second performance parameter of a service device, a third performance parameter of the second terminal, an application scenario parameter of the first terminal, or a preset rule; and the first terminal is an audio playback device, the first terminal is connected to the service device via the second terminal, or the first terminal is directly connected to the service device.

In a fourth aspect, embodiments of the disclosure provide a communication device. The communication device has a function of realizing some or all of the functions of the terminal in the method described in the first aspect. For example, the functions of the communication device may have the functions in some or all embodiments in the disclosure, or may have a functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices.

The communication device may further include a storage module coupled with the transceiver module and the processing module, which stores necessary computer programs and data for the communication device.

In an implementation, the communication device includes: a transceiver module, configured to obtain a current audio signal processing mode, in which the current audio signal processing mode is determined based on at least one of a first performance parameter of a first terminal, a second performance parameter of the service device, a third performance parameter of a second terminal, an application scenario parameter of the first terminal, or a preset rule; and a processing module, configured to obtain first data by processing an audio signal based on the current audio signal processing mode, in which the transceiver module is further configured to send the first data to the first terminal or the second terminal, and the first terminal is an audio playback device, the first terminal is connected to the service device via the second terminal, or the first terminal is directly connected to the service device.

In a fifth aspect, embodiments of the disclosure provide another communication device. The communication device has a function of realizing some or all of the functions of the network device in the method described in the second aspect. For example, the functions of the communication device may have the functions in some or all embodiments in the disclosure, or may have the functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to obtain a current audio signal processing mode, in which the current audio signal processing mode is determined based on at least one of a first performance parameter of the first terminal, a second performance parameter of a service device, a third performance parameter of a second terminal, an application scenario parameter of the first terminal, or a preset rule; and the first terminal is an audio playback device, the first terminal is connected to the service device via the second terminal, or the first terminal is directly connected to the service device, in which the transceiver module is further configured to receive first data, and the first data is obtained by processing a first audio signal by the service device and/or the second terminal based on the current audio signal processing mode; and a processing module, configured to obtain a second audio signal to be played by processing the first data based on the current audio signal processing mode, in which the transceiver module is further configured to play the second audio signal.

In a sixth aspect, embodiments of the disclosure provide another communication device. The communication device has a function of realizing some or all of the functions of the network device in the method described in the second aspect. For example, the functions of the communication device may have the functions in some or all embodiments in the disclosure, or may have the functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to obtain a current audio signal processing mode, in which the current audio signal processing mode is determined based on at least one of a first performance parameter of a first terminal, a second performance parameter of a service device, a third performance parameter of the second terminal, an application scenario parameter of the first terminal, or a preset rule; and the first terminal is an audio playback device, the first terminal is connected to the service device via the second terminal, or the first terminal is directly connected to the service device.

In a seventh aspect, embodiments of the disclosure provide a communication device. The communication device includes a processor. When a computer program in a memory is called by the processor, the method as described in the first aspect is performed.

In an eighth aspect, embodiments of the disclosure provide a communication device. The communication device includes a processor. When a computer program in a memory is called by the processor, the method as described in the second aspect is performed.

In a ninth aspect, embodiments of the disclosure provide a communication device. The communication device includes a processor. When a computer program in a memory is called by the processor, the method as described in the third aspect is performed.

In a tenth aspect, embodiments of the disclosure provide a communication device. The communication device includes a processor and a memory. The memory is stored with a computer program; and the processor is configured to execute the computer program stored in the memory, so that the communication device performs the method as described in the first aspect.

In an eleventh aspect, embodiments of the disclosure provide a communication device. The communication device includes a processor and a memory. The memory is stored with a computer program; and the processor is configured to execute the computer program stored in the memory, so that the communication device performs the method as described in the second aspect.

In a twelfth aspect, embodiments of the disclosure provide a communication device. The communication device includes a processor and a memory. The memory is stored with a computer program; and the processor is configured to execute the computer program stored in the memory, so that the communication device performs the method as described in the third aspect.

In a thirteenth aspect, embodiments of the disclosure provide a communication device. The communication device includes a processor and an interface circuit. The interface circuit is configured to receive code instructions and transmit the code instructions to the processor; and the processor is configured to execute the code instructions, so that the communication device performs the method as described in the first aspect.

In a fourteenth aspect, embodiments of the disclosure provide a communication device. The communication device includes a processor and an interface circuit. The interface circuit is configured to receive code instructions and transmit the code instructions to the processor; and the processor is configured to execute the code instructions, so that the communication device performs the method as described in the second aspect.

In a fifteenth aspect, embodiments of the disclosure provide a communication device. The communication device includes a processor and an interface circuit. The interface circuit is configured to receive code instructions and transmit the code instructions to the processor; and the processor is configured to execute the code instructions, so that the communication device performs the method as described in the third aspect.

In a sixteenth aspect, embodiments of the disclosure provide a communication system. The system includes the communication apparatus as described in the fourth aspect to the sixth aspect, or the system includes the communication device as described in the seventh aspect to the ninth aspect, or the system includes the communication device as described in the tenth aspect to the twelfth aspect, or the system includes the communication device as described in the thirteenth aspect to the fifteenth aspect.

In a seventeenth aspect, embodiments of the disclosure provide a computer-readable storage medium. The computer-readable storage medium is configured to store instructions used by the receiving end. When the instructions are executed, the receiving end performs the method as described in the first aspect.

In an eighteenth aspect, embodiments of the disclosure provide a computer-readable storage medium. The computer-readable storage medium is configured to store instructions used by the receiving end. When the instructions are executed, the receiving end performs the method as described in the second aspect.

In a nineteenth aspect, embodiments of the disclosure provide a computer-readable storage medium. The computer-readable storage medium is configured to store instructions used by the sending end. When the instructions are executed, the sending end performs the method as described in the third aspect.

In a twentieth aspect, embodiments of the disclosure provide a computer program product including a computer program. When the computer program is running on a computer, the computer is caused to perform the method as described in the first aspect.

In a twenty-first aspect, embodiments of the disclosure provide a computer program product including a computer program. When the computer program is running on a computer, the computer is caused to perform the method as described in the second aspect.

In a twenty-second aspect, embodiments of the disclosure provide a computer program product including a computer program. When the computer program is running on a computer, the computer is caused to perform the method as described in the third aspect.

In a twenty-third aspect, embodiments of the disclosure provide a chip system. The chip system includes at least one processor and an interface, and is configured to support the service device to perform functions involved in the first aspect, for example, to determine or process at least one of data or information involved in the above methods. In a possible design, the chip system further includes a memory. The memory is configured to save a necessary computer program and data for the receiving end. The chip system may be constituted by a chip, or may include a chip and other discrete devices.

In a twenty-fourth aspect, embodiments of the disclosure provide a chip system. The chip system includes at least one processor and an interface, and is configured to support the first terminal to perform functions involved in the second aspect, for example, to determine or process at least one of data or information involved in the above methods. In a possible design, the chip system further includes a memory. The memory is configured to save a necessary computer program and data for the sending end. The chip system may be constituted by a chip, or may include a chip and other discrete devices.

In a twenty-fifth aspect, embodiments of the disclosure provide a chip system. The chip system includes at least one processor and an interface, and is configured to support the second terminal to perform functions involved in the third aspect, for example, to determine or process at least one of data or information involved in the above methods. In a possible design, the chip system further includes a memory. The memory is configured to save a necessary computer program and data for the sending end. The chip system may be constituted by a chip, or may include a chip and other discrete devices.

In a twenty-sixth aspect, embodiments of the disclosure provide a computer program. When the computer program is running on a computer, the computer is caused to perform the method as described in the first aspect.

In a twenty-seventh aspect, embodiments of the disclosure provide a computer program. When the computer program is running on a computer, the computer is caused to perform the method as described in the second aspect.

In a twenty-eighth aspect, embodiments of the disclosure provide a computer program. When the computer program is running on a computer, the computer is caused to perform the method as described in the third aspect.

### BRIEF DESCRIPTION OF THE DRAWINGS

In order to explain technical solutions in the embodiments of the disclosure or the related art more clearly, the drawings needed for use in the embodiments of the disclosure or in the related art will be briefly introduced below.
FIG. 1 is a diagram illustrating an architecture of a communication system according to the disclosure.
FIG. 2 is a procedure diagram illustrating a method for processing an audio signal in the related art.
FIG. 3 is a flowchart illustrating a method for processing an audio signal according to an embodiment of the disclosure.
FIG. 4 is a procedure diagram illustrating various candidate audio signal processing modes according to an embodiment of the disclosure.
FIG. 5 is a flowchart illustrating another method for processing an audio signal according to an embodiment of the disclosure.
FIG. 6 is a flowchart illustrating another method for processing an audio signal according to an embodiment of the disclosure.
FIG. 7 is a flowchart illustrating another method for processing an audio signal according to an embodiment of the disclosure.
FIG. 8 is a flowchart illustrating another method for processing an audio signal according to an embodiment of the disclosure.
FIG. 9 is a flowchart illustrating another method for processing an audio signal according to an embodiment of the disclosure.
FIG. 10 is a flowchart illustrating another method for processing an audio signal according to an embodiment of the disclosure.
FIG. 11 is a block diagram illustrating a communication apparatus according to an embodiment of the disclosure.
FIG. 12 is a block diagram illustrating a communication device according to an embodiment of the disclosure.
FIG. 13 is a block diagram illustrating a chip according to an embodiment of the disclosure.

### DETAILED DESCRIPTION

To facilitate understanding of the technical solutions of the disclosure, some terms involved in the embodiments of the disclosure are briefly introduced below.

### 1. Service device.

In the disclosure, a service device refers to any device capable of providing services for an extended reality (XR) device, which may be a cloud device or an edge device.

### 2. 3 degree of freedom (3DoF)

In the 3DoF, a device may detect rotation of the head around three coordinate axes (X, Y, Z), such as tilting and pitching, thus perceived changes in the field of view angle caused by head rotation.

### 3. 6 degree of freedom (6DoF)

In the 6DoF, in addition to perceiving the head rotation of a user around the X, Y, and Z axes, the device may also perceive parallel movement of the user body along three axes (up-down, left-right, front-back). Thus, an XR device with 6DoF allows users to perform more diverse actions, such as walking, jumping, and crouching.

In order to better understand the method and apparatus for processing an audio signal in embodiments of the disclosure, a communication system to which embodiments of the disclosure are applicable is described below.

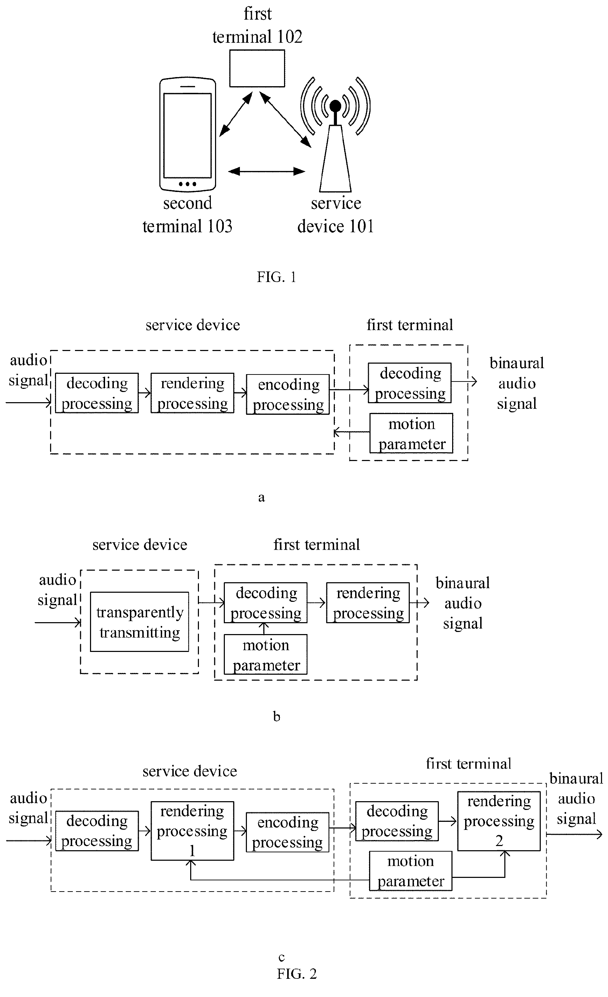

Referring to FIG. 1, it is a diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network side devices and two or more terminals may be included in practical applications. The communication system as illustrated in FIG. 1 includes one service device 101, one first terminal 102 and one second terminal 103 for example.

It needs to be noted that the technical solution in embodiments of the disclosure is applicable to various communication systems, such as a long term evolution (LTE) system, a 5th generation (5G) mobile communication system, a 5G new radio (NR) system or other future new mobile communication systems.

The service device 101 in embodiments of the disclosure may be an entity at a network side for transmitting or receiving a signal, or a device for communicating with a terminal. The service device 101 may be a base transceiver station (BTS) in a global system for mobile communications (GSM) system, a BTS in a code division multiple access (CDMA) system, a NodeB (NB) in a wideband code division multiple access (WCDMA) system, an evolved NB (eNB or eNodeB) in an LTE system, a wireless controller in a cloud radio access network (CRAN) scenario, a radio network controller (RNC), a base station controller (BSC), a home base station (for example, a home evolved NodeB, or a home NodeB, HNB), or a baseband unit (BBU). Alternatively, the network side device may be a relay station, an access point (AP), a vehicle-mounted device, a wearable device, a network side device in a 5G network, or a network side device in a future evolved public land mobile network (PLMN), etc. The network side device may be an AP in a wireless local area network (WLAN), a wireless relay node, a wireless backhaul node, a transmission point (TP), or a transmission and reception point (TRP). The network side device may be a gNB or a transmission point (TRP or TP) in a new radio (NR) system, or one or a set (including a plurality of antenna panels) of antenna panels of a base station in a 5G system, or may also be a network node constituting a gNB or a transmission point, such as a BBU, or a distributed unit (DU), etc. A specific technology and a specific device form adopted by the network side device are not limited in embodiments of the disclosure. The network side device according to embodiments of the disclosure may consist of a central unit (CU) and a distributed unit (DU). The CU may also be referred to as a control unit. The protocol layers of a network side device such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The first terminal 102 and the second terminal 103 in the embodiments of the disclosure may each be a device that provides voice/data connectivity to a user, for example, a handheld device with wireless connection functionality, a vehicle-mounted device, etc. For example, the first terminal 102 may be a wearable device, a virtual reality (VR) device, an Augmented Reality (AR) device, etc. For example, the second terminal 103 may be a mobile phone, a tablet computer, a laptop computer, a palmtop computer, a mobile internet device (MID), a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with wireless communication functionality, a computing device, or other processing devices connected to a wireless modem, a terminal in a 5G network, or a terminal in a future evolved public land mobile network (PLMN) and/or any other suitable device for communicating in a wireless communication system. The embodiments of the disclosure do not limit this.

The wearable device may also be referred to as a wearable smart device, which is a general term for devices developed from intelligent design of daily wearables by applying wearable technology, such as glasses, wristbands, watches, clothing, and shoes. The wearable device is a portable device worn directly on the body or integrated into the clothing or accessories of the user. The wearable device is not merely a hardware device but also achieves powerful functions via software support, data interaction, and cloud interaction. In a broad sense, the wearable smart devices include devices with full functionality and large size that may implement complete or partial functions without relying on a smartphone, for example, smart watches or smart glasses, and devices that are focused solely on a specific type of application function and need to be used in conjunction with other devices such as smartphones, e.g., various smart wristbands and smart jewelry for monitoring physical signs.

It needs to be noted that the technical solution in embodiments of the disclosure is applicable to various communication systems, for example, a LTE system, a 5G mobile communication system, a 5G NR system or other future new mobile communication systems.

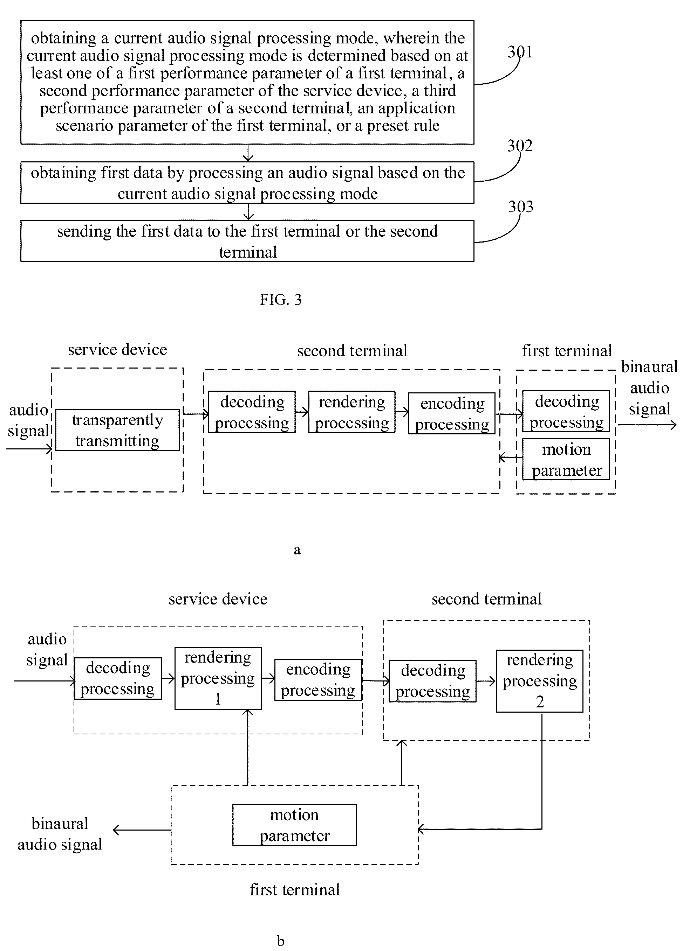

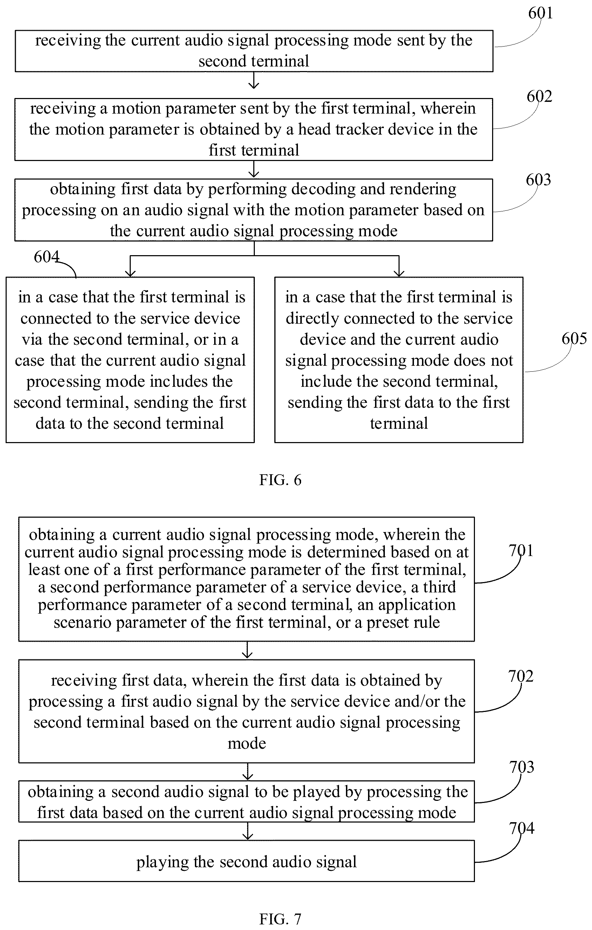

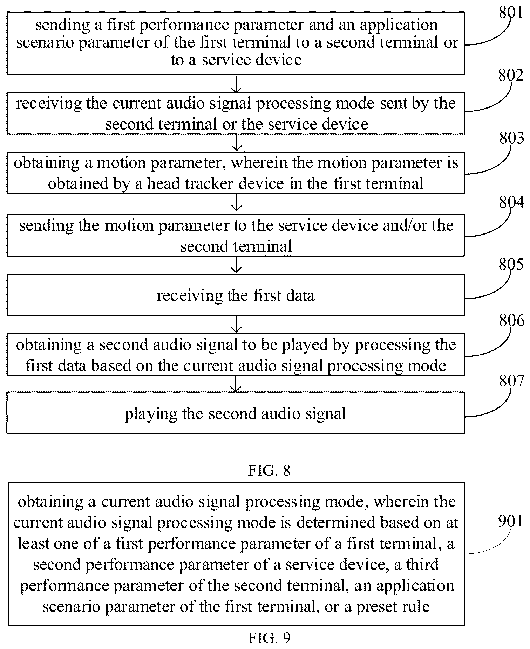

The service device 101 provided in the embodiments of the disclosure may be configured to perform the method shown in embodiments of FIG. 3 to FIG. 6, the first terminal 102 may be configured to perform the method shown in embodiments of FIG. 7 to FIG. 8, and the second terminal 103 may be configured to perform the method shown in embodiments of FIG. 9 to FIG. 10.

It may be understood that, the communication system described in embodiments of the disclosure is intended to explain technical solutions of embodiments of the disclosure more clearly, and does not constitute a limitation to the technical solutions according to embodiments of the disclosure. Those skilled in the art know that, with evolution of a system architecture and emergence of a new service scenario, the technical solutions according to embodiments of the disclosure are also applied to similar technical problems.

In addition, the following points are explained to facilitate understanding of the embodiments of the disclosure.

First, in the disclosure, terms such as "first", "second", and various numerical labels are used only for distinguishing descriptions and do not limit the scope of the embodiments of the disclosure. For example, they are used to distinguish different information or different terminals.

Second, "protocol" referred to in the embodiments of the disclosure may mean standard protocols in the field of communications, for example, including LTE protocols, NR protocols, and related protocols applied in future communication systems, which is not limited in the disclosure.

Third, the embodiments of the disclosure enumerate a plurality of implementations to provide a clear illustration of the technical solutions of embodiments of the disclosure. Those skilled in the art may understand that the plurality of implementations provided in the embodiments of the disclosure may be performed individually, may be performed together with the methods of other implementations in the embodiments of the disclosure in combination, and may be performed individually or in combination with some methods in other related technologies. The embodiments of the disclosure do not limit this.

FIG. 2 is a procedure diagram illustrating a method for processing an audio signal in the related art. As shown in FIG. 2a, a service device (a cloud device or an edge device) may be used to perform decoding and rendering processing on an audio code stream signal. The rendered binaural signal is encoded and then sent to a first terminal (such as an XR Device). The first terminal receives the code stream signal, performs decoding, and outputs the binaural signal. The user obtains an immersive audio experience service via the binaural signal. The rendering processing involves rendering the decoded output signal based on head rotation (3DoF) information output by a head tracker device in the first terminal, or based on head rotation information and the latest position (6DoF) information of the user. However, transmitting the information output by the head tracker device in the first terminal to the service device requires a certain time delay. A delay exceeding a threshold may prevent the rendered binaural signal from tracking the head rotation and/or position information of the user in real time, which thus causes the rendered binaural signal received by the user to not fully match the signal the user should hear at the current moment.

Alternatively, as shown in FIG. 2b, after receiving the code stream signal, the service device may also directly and transparently transmit the code stream signal to the first terminal (such as the XR Device). The first terminal performs rendering processing on the decoded output signal based on the head rotation information (3DoF) output by the head tracker device, or based on the head rotation information and the latest position information (6DoF) of the user. The rendered binaural signal is output to a playback device (such as headphones), and the user obtains the immersive audio experience service via the binaural signal played by the playback device. However, this method needs the first terminal (such as the XR Device) to perform decoding and rendering processing, needs the first terminal to have powerful computing capability and memory space, while also imposing high requirements on a battery capacity of the first terminal.

Alternatively, as shown in FIG. 2c, after receiving the audio code stream signal, the service device first performs decoding processing, then performs first-stage rendering processing ( rendering processing 1 in the figure). The first-stage rendering processing involves rendering the decoded signal based on the information output by the head tracker device. The signal after the first-stage rendering processing is encoded to obtain a code stream signal, which is sent to the first terminal (such as the XR Device). The first terminal receives the code stream signal, performs decoding first, and then performs second-stage rendering processing on the output signal based on the real-time information output by the head tracker device. The rendered binaural signal is output via the playback device (such as headphones), and the user obtains the immersive audio experience via the binaural signal played by the playback device. However, this two-stage rendering processing method increases segmentation steps of the processing procedure from the received code stream signal to obtaining the binaural signal, while the encoding and decoding processing of the rendering results at each stage may increase the complexity and delay of the system.

The method for processing an audio signal provided in the disclosure first determines a current audio signal processing mode based on information such as computing capabilities, memory spaces, and application scenarios of the service device, the first terminal, and the second terminal, and then performs audio signal processing. Thus, in the current audio signal processing mode, while complying with the capability of the service device, the capability of the first terminal, the capability of the second terminal, and scenario requirements, the delay and complexity are minimized to the greatest extent.

The method and apparatus for processing an audio signal in the disclosure are further described in combination with the attached figures.

Referring to FIG. 3, it is a flowchart illustrating a method for processing an audio signal according to an embodiment of the disclosure. As shown in FIG. 3, the method is applied to a service device and may include, but is not limited to, the following steps 301 to 303.

At step 301, a current audio signal processing mode is obtained, in which the current audio signal processing mode is determined based on at least one of a first performance parameter of a first terminal, a second performance parameter of the service device, a third performance parameter of a second terminal, an application scenario parameter of the first terminal, or a preset rule.

The first terminal is an audio playback device, such as XR glasses, which may be directly connected to the service device, or the first terminal may be connected to the service device via the second terminal.

In the disclosure, the current audio signal processing mode is configured to describe which device is currently responsible for decoding and rendering processing of the audio signal. For example, the decoding and rendering processing of the audio signal may be performed by the service device, or the first terminal, or the second terminal, or jointly performed by the service device and the first terminal, or jointly performed by the service device and the second terminal, etc., which is not limited in the disclosure.

In some possible implementations, the preset rule is preset in the service device and indicates which device is responsible for the decoding and rendering processing of the audio signal. For example, the preset rule may indicate that the decoding and rendering processing of the audio signal is to be performed by the service device, or indicate that the decoding and rendering processing of the audio signal is to be performed by the first terminal, etc. Thus, the service device may determine the current audio signal processing mode directly based on the preset rule without considering capabilities of each device.

In some possible implementations, each of the first performance parameter, the second performance parameter, or the third performance parameter includes at least one of: central processor unit (CPU) performance, memory space, hard disk space, or network resource capacity. The application scenario parameter includes at least one of: a movement rate of the first terminal, a degree of freedom of movement of the first terminal, or a rotation rate of the first terminal.

In some possible implementations, the current audio signal processing mode may be received by the service device from the second terminal. That is, the second terminal first determines the current audio signal processing mode based on performance parameters of each device and the scenario information, etc., and then sends the current audio signal processing mode to the service device.

In some possible implementations, the current audio signal processing mode may also be determined by the service device based on at least one of the first performance parameter, the second performance parameter, the third performance parameter, the application scenario parameter of the first terminal, or the preset rule.

In some possible implementations, in a case that the preset rule is not empty, the service device may determine a processing mode indicated in the preset rule as the current audio signal processing mode; or, in a case that the preset rule is empty, the service device may first determine a first ratio between processing loads carried by each device in each candidate processing mode, and a second ratio between the first performance parameter, the second performance parameter and the third performance parameter of the second terminal; and determine a candidate processing mode corresponding to a first ratio mostly correlated with the second ratio as the current audio signal processing mode. For example, a candidate processing mode corresponding to a first ratio that is closest to the second ratio may be determined as the current audio signal processing mode.

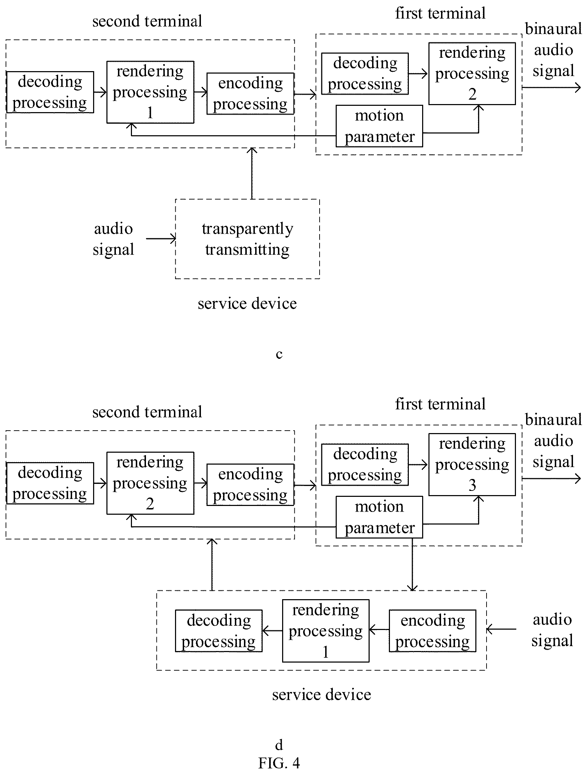

The candidate processing mode includes each of: decoding and rendering processing of the audio signal by the service device (corresponding to FIG. 2a); decoding and rendering processing of the audio signal by the first terminal (corresponding to FIG. 2b); decoding and rendering processing of the audio signal by the second terminal (corresponding to FIG. 4a); decoding and initial rendering processing of the audio signal by the service device, and rendering calibration of the initial rendering processing result by the first terminal (corresponding to FIG. 2c); decoding and initial rendering processing of the audio signal by the service device, and rendering calibration of the initial rendering processing result by the second terminal (corresponding to FIG. 4b); decoding and initial rendering processing of the audio signal by the second terminal, and rendering calibration of the initial rendering processing result by the first terminal (corresponding to FIG. 4c); decoding and initial rendering processing of the audio signal by the service device, correction of the initial rendering processing result by the second terminal, and rendering calibration of the corrected data by the first terminal (corresponding to FIG. 4d). FIG. 4 is a procedure diagram illustrating various candidate audio signal processing modes according to an embodiment of the disclosure.

For example, in each candidate mode as described above, first ratios between processing loads carried by each device (i.e., ratios between service device: first terminal: second terminal) are respectively: 3:0:0 (first candidate processing mode), 0:3:0 (second candidate processing mode), 0:0:3 (third candidate processing mode), 2:1:0 (fourth candidate processing mode), 2:0:1 (fifth candidate processing mode), 0:1:2 (sixth candidate processing mode), and 1:1:1 (seventh candidate processing mode). A second ratio determined based on the second performance parameter, the first performance parameter and the third performance parameter (CPU performance, memory space and hard disk space) is 10:1:7. It may be seen via comparison that the first ratio corresponding to the fifth candidate processing mode (2:0:1) is mostly correlated with the second ratio, thus the fifth candidate processing mode may be determined as the current audio signal processing mode. That is, the current audio signal processing mode is that the service device performs the decoding and initial rendering processing of the audio signal, and the second terminal performs the rendering calibration of the initial rendering processing result.

It needs to be noted that the values of the above first ratios are for illustrative purposes only and do not represent the actual processing loads carried by each device in the corresponding candidate mode. The specific value of the first ratio may be determined by the service device or the second terminal based on actual performance parameters of each device, which is not limited in the disclosure.

It needs to be noted that when the plurality of devices process the audio signal based on time-division rending, acquisition times of the motion parameters used by different devices are different. For example, in the fourth candidate processing mode, the service device performs the initial rendering processing based on the motion parameter sent by the first terminal before the service device performs the rendering processing; then the first terminal performs rendering calibration of the initial rendering processing result based on the motion parameter obtained in real time by a head tracker device in the first terminal, which may better reflect the current motion state of the user. Thus, the audio signal after rendering calibration based on the latest motion parameter better matches head rotation of the user and/or position information of the user.

The motion parameter includes at least one of: a rotation rate, a position coordinate, or a movement rate.

In some possible implementations, the service device may also determine the respective computational capabilities based on the CPU performance, the memory space, the hard disk space, etc. of the first terminal, the second terminal, and the service device. Then, the service device determines a network transmission capability based on the respective network resource capacities and determines the amount/value of motion parameters that need to be transmitted based on the movement rate, the degree of freedom of movement, and the rotation rate of the first terminal. Finally, the service device may comprehensively determine the current audio signal processing mode by integrating the respective computational capabilities, network transmission capabilities, and the amount of motion information that needs to be transmitted. Thus, the determined current audio signal processing mode minimizes the delay and avoids affecting the use of the first terminal.

For example, in a case that the computational capability of the first terminal meets the calculation requirements, it is directly determined that the first terminal performs the decoding and rendering processing of the audio signal, thus ensuring that the rendered audio signal may track the head movement of the user in real time. Alternatively, in a case that the computational capability of the first terminal does not meet the calculation requirements, but the computational capabilities of other devices meet the calculation requirements and their network transmission capabilities are good, it may be determined that the service device or the second terminal performs the decoding and rendering processing of the audio signal, thus reducing power consumption of the first terminal and minimizing the delay of the rendered binaural signal.

In some possible implementations, after determining the current audio signal processing mode, the service device may also send the current audio signal processing mode to the first terminal and the second terminal, respectively.

In some possible implementations, if the first terminal is connected to the service device via the second terminal, the service device may only send the current audio signal processing mode to the second terminal, so that the second terminal may then send the current audio signal processing mode to the first terminal, which is not limited in the disclosure.

At step 302, first data is obtained by processing an audio signal based on the current audio signal processing mode.

It may be understood that the first data may be data obtained after the service device performs the decoding and rendering processing on the audio signal based on the current audio signal processing mode, or may be an audio signal directly transparently transmitted by the service device based on the current audio signal processing mode, etc.

At step 303, the first data is sent to the first terminal or the second terminal.

In some possible implementations, in a case that the first terminal is directly connected to the service device and the first data does not need to be processed by the second terminal, that is, the first terminal is directly connected to the service device and the current audio signal processing mode does not include the second terminal, then the service device may send the first data to only the first terminal.

In some possible implementations, in a case that the first terminal is connected to the service device via the second terminal, then regardless of whether the first data needs to be processed by the second terminal, the service device needs to send the first data to the second terminal.

In some possible implementations, in a case that the first data needs to be processed by the second terminal, that is, the current audio signal processing mode includes the second terminal, then the service device also needs to send the first data to the second terminal.

In summary, the service device first obtains the current audio signal processing mode determined based on the at least one of the performance parameters of each device, the application scenario parameter, or the preset rule; the service device obtains the first data by processing the audio signal based on the current audio signal processing mode; and the service device sends the first data to the first terminal or the second terminal. Thus, by adopting the audio signal processing mode that complies with the capability of the service device, the capability of the first terminal, the capability of the second terminal, and the scenario requirements, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

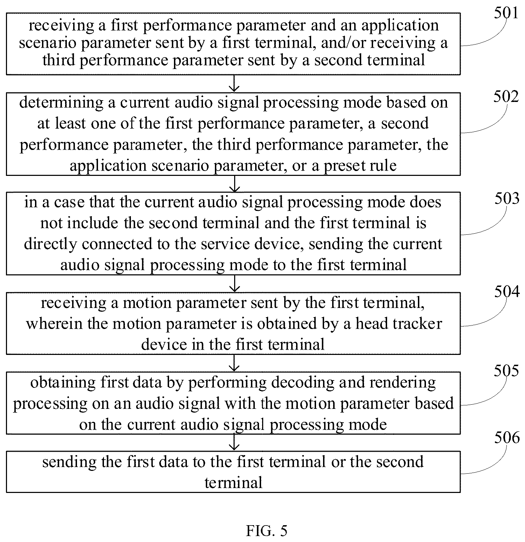

Referring to FIG. 5, it is a flowchart illustrating another method for processing an audio signal according to an embodiment of the disclosure. As shown in FIG. 5, the method is applied to a service device and may include, but is not limited to, the following steps 501 to 506.

At step 501, a first performance parameter and an application scenario parameter sent by a first terminal are received, and/or a third performance parameter sent by a second terminal is received.

In some possible implementations, the service device may directly receive the first performance parameter and the application scenario parameter sent by the first terminal.

In some possible implementations, the service device may receive the first performance parameter and the application scenario parameter via the second terminal.

In some possible implementations, after receiving the first performance parameter and the application scenario parameter, the second service may determine that the first terminal may perform decoding and rendering processing of the audio signal, and thus may not send the third performance parameter to the service device; that is, the service device may not receive the third performance parameter.

In some possible implementations, after receiving the first performance parameter and the application scenario parameter, the second service may determine that the first terminal cannot participate in the decoding and rendering processing of the audio signal, and thus may not send the first performance parameter to the service device. That is, the service device may not receive the first performance parameter.

At step 502, a current audio signal processing mode is determined based on at least one of the first performance parameter, a second performance parameter, the third performance parameter, the application scenario parameter, or a preset rule.

At step 503, in a case that the current audio signal processing mode does not include the second terminal and the first terminal is directly connected to the service device, the current audio signal processing mode is sent to the first terminal.

For specific implementation of the above step 502 and step 503, reference may be made to detailed descriptions in other embodiments of the disclosure, which are not repeated here.

At step 504, a motion parameter sent by the first terminal is received, in which the motion parameter is obtained by a head tracker device in the first terminal.

The motion parameter includes at least one of: a rotation rate, a position coordinate, or a movement rate.

In some possible implementations, in a case that the first terminal is directly connected to the service device, the service device may directly receive the motion parameter sent by the first terminal.

In some possible implementations, in a case that the first terminal is connected to the service device via the second terminal, the service device may receive the motion parameter transparently transmitted by the second terminal.

At step 505, first data is obtained by performing decoding and rendering processing on an audio signal with the motion parameter based on the current audio signal processing mode.

In some possible implementations, in a case that the current audio signal processing mode is that the service device performs the decoding and rendering processing of the audio signal, then the obtained first data is rendered data.

In some possible implementations, in a case that the current audio signal processing mode is that the first terminal performs the decoding and rendering processing of the audio signal, then the first data is an unprocessed audio signal. That is, the service device directly outputs the received audio signal.

In some possible implementations, in a case that the current audio signal processing mode is that the service device performs the decoding and initial rendering processing of the audio signal and the first terminal performs rendering calibration of an initial rendering processing result, then the first data is the initial rendering processing result.

At step 506, the first data is sent to the first terminal.

For specific implementation of the above step 506, reference may be made to detailed descriptions in other embodiments of the disclosure, which are not repeated here.

In summary, the service device first determines the current audio signal processing mode based on the at least one of performance parameters of each device, the application scenario parameter, or the preset rule. Then, the service device sends the current audio signal processing mode to the first terminal. After receiving the motion parameter sent by the first terminal, the service device obtains the first data by processing the audio signal with the motion parameter based on the current audio signal processing mode, and sends the first data to the first terminal. Thus, the audio signal processing mode that complies with the capability of the service device, the capability of the first terminal, the capability of the second terminal, and the scenario requirements may be obtained via simple interaction of performance parameters, and the audio signal is processed based on the determined audio signal processing mode. In this way, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

Referring to FIG. 6, it is a flowchart illustrating a method for processing an audio signal according to an embodiment of the disclosure. As shown in FIG. 6, the method is applied to a service device. In the embodiment of the disclosure, a current audio signal processing mode is determined by a second terminal and distributed to the service device and a first terminal. The method may include but is not limited to the following steps 601 to 605.

At step 601, the current audio signal processing mode sent by the second terminal is received.

At step 602, a motion parameter sent by the first terminal is received, in which the motion parameter is obtained by a head tracker device in the first terminal.

The motion parameter may be sent directly to the service device by the first terminal, or may be transparently transmitted to the service device via the second terminal, which is not limited in the disclosure.

At step 603, first data is obtained by performing decoding and rendering processing on an audio signal with the motion parameter based on the current audio signal processing mode.

At step 604, in a case that the first terminal is connected to the service device via the second terminal, or in a case that the current audio signal processing mode includes the second terminal, the first data is sent to the second terminal.

At step 605, in a case that the first terminal is directly connected to the service device and the current audio signal processing mode does not include the second terminal, the first data is sent to the first terminal.

For specific implementation of the above steps 601 to 605, reference may be made to detailed descriptions in other embodiments of the disclosure, which are not repeated here.

In summary, the service device first receives the current audio signal processing mode sent by the second terminal; after receiving the motion parameter sent by the first terminal, the service device obtains the first data by processing the audio signal with the motion parameter based on the current audio signal processing mode and sends the first data to the second terminal. Thus, by adopting the audio signal processing mode that complies with the capability of the service device, the capability of the first terminal, the capability of the second terminal, and the scenario requirements, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

Referring to FIG. 7, it is a flowchart illustrating a method for processing an audio signal according to an embodiment of the disclosure. As shown in FIG. 7, the method is applied to a first terminal and may include, but is not limited to, the following steps 701 to 704.

At step 701, a current audio signal processing mode is obtained, in which the current audio signal processing mode is determined based on at least one of a first performance parameter of a first terminal, a second performance parameter of the service device, a third performance parameter of a second terminal, an application scenario parameter of the first terminal, or a preset rule.

The first terminal is an audio playback device, the first terminal is connected to the service device via the second terminal, or the first terminal is directly connected to the service device.

In the disclosure, the current audio signal processing mode is configured to describe which device is currently responsible for decoding and rendering processing of the audio signal. For example, the decoding and rendering processing of the audio signal may be performed by the service device, or the first terminal, or the second terminal, or jointly performed by the service device and the first terminal, or jointly performed by the service device and the second terminal, etc., which is not limited in the disclosure.

In some possible implementations, the preset rule is preset in a device (for example, the service device, the first terminal, or the second terminal) and indicates which device is responsible for the decoding and rendering processing of the audio signal. For example, the preset rule may indicate that the decoding and rendering processing of the audio signal is to be performed by the service device, or indicate that the decoding and rendering processing of the audio signal is to be performed by the first terminal, etc. Thus, the service device or the second terminal may determine the current audio signal processing mode directly based on the preset rule without considering capabilities of each device.

In some possible implementations, each of the first performance parameter, the second performance parameter, or the third performance parameter includes at least one of: CPU performance, memory space, hard disk space, or network resource capacity. The application scenario parameter includes at least one of: a movement rate of the first terminal, a degree of freedom of movement of the first terminal, or a rotation rate of the first terminal.

In some possible implementations, the current audio signal processing mode may be received by the first terminal from the second terminal. That is, the second terminal first determines the current audio signal processing mode based on performance parameters of each device and scenario information, etc., and then sends the current audio signal processing mode to the first terminal.

In some possible implementations, the current audio signal processing mode may also be received by the first terminal from the service device. That is, the service device first determines the current audio signal processing mode based on performance parameters of each device and scenario information, etc., and then sends the current audio signal processing mode to the first terminal.

In some possible implementations, in a case that the first terminal is connected to the service device via the second terminal, the current audio signal processing mode received by the first terminal from the second terminal may also be determined by the service device and transparently transmitted to the first terminal via the second terminal, which is not limited in the disclosure.

At step 702, first data is received, in which the first data is obtained by processing a first audio signal by the service device and/or the second terminal based on the current audio signal processing mode.

In some possible implementations, in a case that the first terminal is connected to the service device via the second terminal, the first data received by the first terminal from the second terminal may be transparently transmitted by the second terminal. That is, the first data is obtained after the service device processes the first audio signal and is then transparently transmitted to the first terminal via the second terminal.

At step 703, a second audio signal to be played is obtained by processing the first data based on the current audio signal processing mode.

In some possible implementations, processing of the first data by the first terminal may include: performing decoding processing on the first data, or performing decoding and rendering processing on the first data, or performing decoding and rendering calibration processing on the first data, etc., which is not limited in the disclosure.

In some possible implementations, in a case that the current audio signal processing mode does not include the first terminal, that is, there is no need for the first terminal to perform rendering processing on the audio signal, the first terminal may directly perform decoding processing on the first data to obtain the second audio signal.

In some possible implementations, in a case that the current audio signal processing mode indicates that decoding and rendering processing of the audio signal is performed by the first terminal, the second audio signal is obtained by performing decoding and rendering processing on the first data based on a current motion parameter.

The motion parameter includes at least one of: a rotation rate, a position coordinate, or a movement rate.

In some possible implementations, in a case that the current audio signal processing mode indicates that rendering calibration of the audio signal is performed by the first terminal, the second audio signal is obtained by performing rendering calibration on the first data based on a current motion parameter.

It needs to be noted that when the first terminal performs the rendering calibration on the first data, the first data may be sent by the second terminal or the service device.

At step 704, the second audio signal is played.

In summary, the first terminal first obtains the current audio signal processing mode determined based on the at least one of the performance parameters of each device, the application scenario parameter, or the preset rule; after receiving the first data, the first terminal obtains the second audio signal by processing the first data based on the current audio signal processing mode and plays the second audio signal. Thus, by adopting the audio signal processing mode that complies with the capability of the service device, the capability of the first terminal, the capability of the second terminal, and the scenario requirements, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

Referring to FIG. 8, it is a flowchart illustrating a method for processing an audio signal according to an embodiment of the disclosure. As shown in FIG. 8, the method is applied to a first terminal and may include, but is not limited to, the following steps 801 to 807.

At step 801, a first performance parameter and an application scenario parameter of the first terminal are sent to a second terminal or to a service device.

In some possible implementations, in a case that the first terminal is directly connected to the service device, the first terminal may directly send the first performance parameter and the application scenario parameter to the service device.

In some possible implementations, in a case that the first terminal is connected to the service device via the second terminal, the first terminal needs to send the first performance parameter and the application scenario parameter to the service device via the second terminal.

In some possible implementations, in a case that the current audio signal processing mode is determined by the second terminal, the first terminal may send the first performance parameter and the application scenario parameter to only the second terminal.

In some possible implementations, in a case that the current audio signal processing mode is determined by the service device, the first terminal may send the first performance parameter and the application scenario parameter to only the service device.

At step 802, the current audio signal processing mode sent by the second terminal or the service device is received.

At step 803, a motion parameter is obtained, in which the motion parameter is obtained by a head tracker device in the first terminal.

For specific implementation of the above step 802 and step 803, reference may be made to detailed descriptions in any embodiment of the disclosure, which are not repeated here.

At step 804, the motion parameter is sent to the service device and/or the second terminal.

In the disclosure, since each device needs to perform the rendering processing of the audio signal based on the motion parameter, the first terminal may determine whether to send the motion parameter to the service device and the second terminal based on the current audio signal processing mode.

In some possible implementations, in a case that the current audio signal processing mode does not include the service device and the second terminal, that is, there is no need for the service device and the second terminal currently to participate in rendering the audio signal, then the first terminal may not send the motion parameter to the service device and the second terminal.

In some possible implementations, in a case that the current audio signal processing mode indicates that the service device participates in the decoding and rendering processing of a first audio signal, the motion parameter is sent to the service device.

In some possible implementations, in a case that the current audio signal processing mode indicates that the second terminal participates in the decoding and rendering processing of the first audio signal, the motion parameter is sent to the second terminal.

In some possible implementations, in a case that the current audio signal processing mode indicates that both the service device and the second terminal participate in rendering processing of the first audio signal, motion parameters corresponding to different acquisition moments are sent to the service device and the second terminal, respectively.

In the disclosure, since the first audio signal first passes through the service device and then reach the second terminal, the first terminal may send the previously acquired motion parameter to the service device. The service device performs the initial rendering processing on the first audio signal based on the motion parameter. After sending the motion parameter to the service device, the first terminal continues to acquire the motion parameters, and the first terminal may send the later acquired motion parameters to the second terminal. Subsequently, the second terminal may correct or calibrate the initial rendering processing result based on the obtained motion parameters, thus making first data processed by the second terminal better match the head movement information of the user and have lower delay.

At step 805, the first data is received.

At step 806, a second audio signal to be played is obtained by processing the first data based on the current audio signal processing mode.

At step 807, the second audio signal is played.

For specific implementation of the above steps 805 to 807, reference may be made to detailed descriptions in other embodiments of the disclosure, which are not repeated here.

In summary, the first terminal sends the first performance parameter and the application scenario parameter to the service device and/or the second terminal. Then, the first terminal may receive the current audio signal processing mode. After obtaining the motion parameter, the first terminal may send the motion parameter to the second terminal and/or the service device. After receiving the first data, the first terminal obtains the second audio signal to be played by processing the first data based on the current audio signal processing mode, and plays the second audio signal. Thus, the audio signal processing mode that complies with the capability of the service device, the capability of the first terminal, the capability of the second terminal, and the scenario requirements may be obtained via simple interaction of performance parameters, and the audio signal is processed based on the determined audio signal processing mode. In this way, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

Referring to FIG. 9, it is a flowchart illustrating a method for processing an audio signal according to an embodiment of the disclosure. As shown in FIG. 9, the method is applied to a second terminal and may include, but is not limited to, the following step 901.

At step 901, a current audio signal processing mode is obtained, in which the current audio signal processing mode is determined based on at least one of a first performance parameter of a first terminal, a second performance parameter of a service device, a third performance parameter of the second terminal, an application scenario parameter of the first terminal, or a preset rule.

The first terminal is an audio playback device, such as XR glasses, which may be directly connected to the service device, or the first terminal may be connected to the service device via the second terminal.

In the disclosure, the current audio signal processing mode is configured to describe which device is currently responsible for decoding and rendering processing of the audio signal. For example, the decoding and rendering processing of the audio signal may be performed by the service device, or the first terminal, or the second terminal, or jointly performed by the service device and the first terminal, or jointly performed by the service device and the second terminal, etc., which is not limited in the disclosure.

In some possible implementations, the preset rule is preset in the second terminal and indicates which device is responsible for the decoding and rendering processing of the audio signal. For example, the preset rule may indicate that the decoding and rendering processing of the audio signal is to be performed by the service device, or indicate that the decoding and rendering processing of the audio signal is to be performed by the first terminal, etc. Thus, the second terminal may determine the current audio signal processing mode directly based on the preset rule without considering capabilities of each device.

In some possible implementations, each of the first performance parameter, the second performance parameter, or the third performance parameter includes at least one of: CPU performance, memory space, hard disk space, or network resource capacity. The application scenario parameter includes at least one of: a movement rate of the first terminal, a degree of freedom of movement of the first terminal, or a rotation rate of the first terminal.

In some possible implementations, the current audio signal processing mode may be received by the second terminal from the service device. That is, the service device first determines the current audio signal processing mode based on performance parameters of each device and scenario information, etc., and then sends the current audio signal processing mode to the second terminal.

In some possible implementations, the current audio signal processing mode may also be determined by the second terminal based on at least one of the first performance parameter, the second performance parameter, the third performance parameter, the application scenario parameter of the first terminal, or the preset rule.

In some possible implementations, in a case that the preset rule is not empty, the second terminal may determine a processing mode indicated in the preset rule as the current audio signal processing mode; or, in a case that the preset rule is empty, the second terminal may first determine a first ratio between processing loads carried by each device in each candidate processing mode, and a second ratio between the first performance parameter, the second performance parameter and the third performance parameter of the second terminal; and determine a candidate processing mode corresponding to a first ratio mostly correlated with the second ratio as the current audio signal processing mode. For example, a candidate processing mode corresponding to a first ratio that is closest to the second ratio may be determined as the current audio signal processing mode.

The candidate processing mode includes each of: decoding and rendering processing of the audio signal by the service device (corresponding to FIG. 2a); decoding and rendering processing of the audio signal by the first terminal (corresponding to FIG. 2b); decoding and rendering processing of the audio signal by the second terminal (corresponding to FIG. 4a); decoding and initial rendering processing of the audio signal by the service device, and rendering calibration of the initial rendering processing result by the first terminal (corresponding to FIG. 2c); decoding and initial rendering processing of the audio signal by the service device, and rendering calibration of the initial rendering processing result by the second terminal (corresponding to FIG. 4b); decoding and initial rendering processing of the audio signal by the second terminal, and rendering calibration of the initial rendering processing result by the first terminal (corresponding to FIG. 4c); decoding and initial rendering processing of the audio signal by the service device, correction of the initial rendering processing result by the second terminal, and rendering calibration of the corrected data by the first terminal (corresponding to FIG. 4d). FIG. 4 is a procedure diagram illustrating various candidate audio signal processing modes according to an embodiment of the disclosure.

For example, in each candidate mode as described above, first ratios between processing loads carried by each device (i.e., ratios between service device: first terminal: second terminal) are respectively: 3:0:0 (first candidate processing mode), 0:3:0 (second candidate processing mode), 0:0:3 (third candidate processing mode), 2:1:0 (fourth candidate processing mode), 2:0:1 (fifth candidate processing mode), 0:1:2 (sixth candidate processing mode), and 1:1:1 (seventh candidate processing mode). A second ratio determined based on the second performance parameter, the first performance parameter and the third performance parameter (CPU performance, memory space and hard disk space) is 10:1:7. It may be seen via comparison that the first ratio corresponding to the fifth candidate processing mode (2:0:1) is mostly correlated with the second ratio, thus the fifth candidate processing mode may be determined as the current audio signal processing mode. That is, the current audio signal processing mode is: the service device performs the decoding and initial rendering processing of the audio signal, and the second terminal performs the rendering calibration of the initial rendering processing result.

It needs to be noted that the values of the above first ratios are for illustrative purposes only and do not represent the actual processing loads carried by each device in the corresponding candidate mode. The specific value of the first ratio may be determined by the service device or the second terminal based on actual performance parameters of each device, which is not limited in the disclosure.

It needs to be noted that when the plurality of devices process the audio signal based on time-division rending, acquisition times of the motion parameters used by different devices are different. For example, in the fourth candidate processing mode, the service device performs the initial rendering processing based on the motion parameter sent by the first terminal before the service device performs the rendering processing; then the first terminal performs rendering calibration of the initial rendering processing result based on the motion parameter obtained in real time by a head tracker device in the first terminal, which may better reflect the current motion state of the user. Thus, the audio signal after rendering calibration based on the latest motion parameter better matches head rotation of the user and/or position information of the user.

The motion parameter includes at least one of: a rotation rate, a position coordinate, or a movement rate.

In some possible implementations, the second terminal may also determine the respective computational capabilities based on the CPU performance, the memory space, the hard disk space, etc. of the first terminal, the second terminal, and the service device. Then, the second terminal determines a network transmission capability based on the respective network resource capacity and determines the amount of motion parameters that need to be transmitted based on the movement rate, the degree of freedom of movement, and the rotation rate of the first terminal. Finally, the second terminal may comprehensively determine the current audio signal processing mode by integrating the respective computational capabilities, network transmission capabilities, and the amount of motion information that needs to be transmitted. Thus, the determined current audio signal processing mode minimizes the delay and avoids affecting the use of the first terminal.

For example, in a case that the computational capability of the first terminal meets the calculation requirements, it is directly determined that the first terminal performs the decoding and rendering processing of the audio signal, thus ensuring that the rendered audio signal may track the head movement of the user in real time. Alternatively, in a case that the computational capability of the first terminal does not meet the calculation requirements, but the computational capabilities of other devices meet the calculation requirements and their network transmission capabilities are good, it may be determined that the service device or the second terminal performs the decoding and rendering processing of the audio signal, thus reducing power consumption of the first terminal and minimizing the delay of the rendered binaural signal.

In some possible implementations, after determining the current audio signal processing mode, the second terminal may also send the current audio signal processing mode to the first terminal and the service device, respectively.

In the disclosure, in a case that the current audio signal processing mode determined by the second terminal does not include the second terminal, that is, the second terminal does not need to participate in the audio signal rendering processing process, and the first terminal may be directly connected to the service device, then during actual use of the first terminal, the second terminal does not need to perform any data processing or transparent transmission work.

In summary, by using the current audio signal processing mode determined based on at least one of the performance parameters of each device, the application scenario parameter, or the preset rule, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

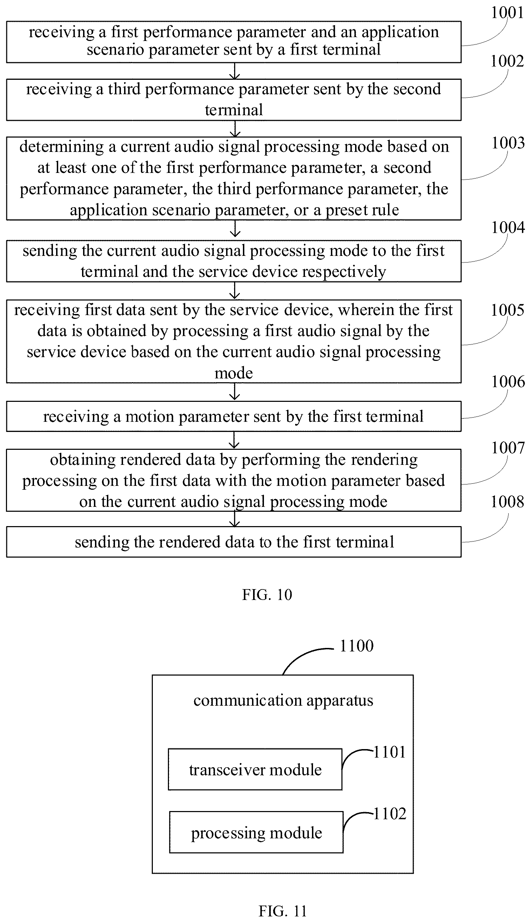

Referring to FIG. 10, it is a flowchart illustrating a method for processing an audio signal according to an embodiment of the disclosure. As shown in FIG. 10, the method is applied to a second terminal and may include, but is not limited to, the following steps 1001 to 1008.

At step 1001, a first performance parameter and an application scenario parameter sent by a first terminal are received.

At step 1002, a third performance parameter sent by the second terminal is received.

The above step 1001 and step 1002 may also be executed in parallel, or the step 1002 may be executed before the step 1001, which is not limited in the disclosure.

At step 1003, a current audio signal processing mode is determined based on at least one of the first performance parameter, a second performance parameter, the third performance parameter, the application scenario parameter, or a preset rule.

At step 1004, the current audio signal processing mode is sent to the first terminal and the service device, respectively.

For specific implementation of the above steps 1001 to 1004, reference may be made to detailed descriptions in other embodiments of the disclosure, which are not repeated here.

At step 1005, first data sent by the service device is received, in which the first data is obtained by processing a first audio signal by the service device based on the current audio signal processing mode.

In some possible implementations, the first data may be the first audio signal directly transparently transmitted by the service device. That is, the current audio signal processing mode does not include the service device, so the service device only performs encoding processing on the first audio signal based on a communication protocol with the second terminal.

At step 1006, a motion parameter sent by the first terminal is received.

The motion parameter includes at least one of: a rotation rate, a position coordinate, or a movement rate.

The above step 1005 and step 1006 may also be executed in parallel, or the step 1006 may be executed before the step 1005, which is not limited in the disclosure.

At step 1007, rendered data is obtained by performing the rendering processing on the first data with the motion parameter based on the current audio signal processing mode

In some possible implementations, in a case that the current audio signal processing mode indicates that rendering processing of the audio signal is performed by the second terminal, then the second terminal may perform the rendering processing on the first data based on the obtained motion parameter to obtain the rendered data.

In some possible implementations, in a case that the current audio signal processing mode indicates that the second terminal performs correction processing on the first data sent by the service device, then the second terminal may perform the rendering correction on the first data based on the obtained motion parameter to obtain rendering-corrected data.

In some possible implementations, in a case that the current audio signal processing mode does not include the second terminal, that is, the second terminal does not participate in the rendering processing of the audio signal, and the first terminal may be directly connected to the service device, then the second terminal may not receive the motion parameter sent by the first terminal. In this case, after receiving the first data, the second terminal may perform encoding processing on the first data based on a communication protocol with the first terminal and then directly transparently transmit the encoded first data to the first terminal.

It needs to be noted that the rendered data obtained by the second terminal may be an audio signal that may be played directly, or may be an audio signal that needs rendering calibration of the first terminal, which is not limited in the disclosure.

At step 1008, the rendered data is sent to the first terminal.

In summary, after receiving the first performance parameter and the application scenario parameter sent by the first terminal, and the second performance parameter sent by the service device, the second terminal may determine the current audio signal processing mode based on the at least one of the performance parameters of each device, the scenario parameter, or the preset rule. After obtaining the motion parameter and the first data, the second terminal may obtain the rendered result by performing the rendering processing on the first data based on the current audio signal processing mode, and send the rendered result to the first terminal. Thus, the audio signal processing mode that complies with the capability of the service device, the capability of the first terminal, the capability of the second terminal, and the scenario requirements may be obtained via simple interaction of performance parameters, and the audio signal is processed based on the determined audio signal processing mode. In this way, not only the delay for the XR service may be minimized, but also the complexity for the XR service and the requirements to the XR device may be reduced.

The method for processing an audio signal provided in the disclosure is further described below in combination with the following practical application scenarios.

### Application scenario 1

A first terminal currently held by a user is a lightweight device with limited computing resources and network resources in the application environment where the first terminal is located are good. The user visits a museum using the first terminal . During the visit, the user hopes to appreciate various exhibits quietly and leisurely, and it is also expected that a movement rate of the body of the user and a rotation rate of the head of the user are slow. The summarized parameter information is shown in Table 1 below.

**Table 1**

| parameter name | degree | remarks |
|---|---|---|
| first performance parameter | limited computing resources | the first terminal is a lightweight AR glasses |
| network condition | good | transmission bandwidth, etc., is guaranteed |
| second performance parameter | sufficient computing resources | |
| rotation rate of the head of the user | slow | |
| movement rate of the body of the user | slow | |

In this state, for the second terminal or the service device, the service device may be selected to perform the rendering of the audio signal.

### Application scenario 2

A first terminal currently held by a user is a heavyweight device with rich computing resources and network resources in the application environment where the first terminal is located are moderate. The user watches a car race using the first terminal . During the viewing process, the user needs to constantly rotate the head to appreciate each speeding car, and also needs to constantly change position to obtain the best viewing angle. The summarized parameter information is shown in Table 2 below.

**Table 2**

| parameter name | degree | remarks |
|---|---|---|
| first performance parameter | abundant computing resources | the first terminal is a heavyweight AR glasses |
| network condition | moderate | the network condition is moderate |
| second performance parameter | moderate computing resources | |
| rotation rate of the head of the user | fast | |
| movement rate of the body of the user | fast | |

In this state, the second terminal or the service device may select the first terminal to perform binaural rendering processing of the audio signal.

### Application scenario 3

A first terminal currently held by a user is a medium-level device with moderate computing resources and network resources in the application environment where the first terminal is located are moderate. The user walks in a park using the first terminal. During the walk, the user needs to rotate the head to observe the flowers, plants, and trees in the park, and also needs to change position to appreciate various landscapes in the park. The summarized parameter information is shown in Table 3 below.

**Table 3**

| parameter name | degree | remarks |
|---|---|---|
| first performance parameter | moderate computing resources | the first terminal is a medium-level AR glasses |
| network condition | moderate | the network condition is moderate |
| second performance parameter | moderate computing resources | |
| rotation rate of the head of the user | moderate | |
| movement rate of the body of the user | moderate | |

In this state, the second terminal or the service device may select the first terminal to perform rendering processing of the audio signal.

It needs to be noted that the above scenarios and the finally determined audio signal processing modes are for illustrative purposes only and should not be construed as limitations to the method for processing an audio signal provided in the disclosure.

Referring to FIG. 11, it is a block diagram illustrating a communication apparatus according to an embodiment of the disclosure. The communication apparatus 1100 illustrating in FIG. 11 may include a transceiver module 1101 and a processing module 1102. The transceiver module 1101 may include a transmitting module and/or a receiving module, the transmitting module is used for realizing a transmitting function, and the receiving module is used for realizing a receiving function, and the transceiver module may realize the transmitting function and/or the receiving function.

The communication apparatus 1100 may be a service device, an apparatus in the service device, or an apparatus that may be used in conjunction with the service device.

In the case that the communication apparatus 1100 is configured on the service device side, the transceiver module 1101 is configured to obtain a current audio signal processing mode, in which the current audio signal processing mode is determined based on at least one of a first performance parameter of a first terminal, a second performance parameter of the service device, a third performance parameter of a second terminal, an application scenario parameter of the first terminal, or a preset rule.

The processing module 1102 is configured to obtain first data by processing an audio signal based on the current audio signal processing mode.

The transceiver module 1101 is further configured to send the first data to the first terminal or the second terminal, and the first terminal is an audio playback device, the first terminal is connected to the service device via the second terminal, or the first terminal is directly connected to the service device.

In some possible implementations, the transceiver module 1101 is further configured to receive the current audio signal processing mode sent by the second terminal; or, the processing module 1102 is further configured to determine the current audio signal processing mode based on at least one of the first performance parameter, the second performance parameter, the third performance parameter, the application scenario parameter, or the preset rule.

In some possible implementations, each of the first performance parameter, the second performance parameter, or the third performance parameter includes at least one of: CPU performance, memory space, hard disk space, or network resource capacity; the application scenario parameter includes at least one of: a movement rate of the first terminal, a degree of freedom of movement of the first terminal, or a rotation rate of the first terminal.

In some possible implementations, the transceiver module 1101 is further configured to send the current audio signal processing mode to the first terminal and the second terminal, respectively.

In some possible implementations, the transceiver module 1101 is further configured to receive the first performance parameter and the application scenario parameter sent by the first terminal; and/or, receive the third performance parameter sent by the second terminal.

In some possible implementations, the processing module 1102 is further configured to, in a case that the preset rule is not empty, determine a processing mode indicated in the preset rule as the current audio signal processing mode; or, in a case that the preset rule is empty, determine a first ratio between processing loads carried by each device in each candidate processing mode, and a second ratio between the first performance parameter, the second performance parameter and the third performance parameter of the second terminal; and determine a candidate processing mode corresponding to a first ratio mostly correlated with the second ratio as the current audio signal processing mode.

In some possible implementations, the candidate processing mode includes each of: decoding and rendering processing of the audio signal by the service device; decoding and rendering processing of the audio signal by the first terminal; decoding and rendering processing of the audio signal by the second terminal; decoding and initial rendering processing of the audio signal by the service device, and rendering calibration of an initial rendering processing result by the first terminal; decoding and initial rendering processing of the audio signal by the service device, and rendering calibration of an initial rendering processing result by the second terminal; decoding and initial rendering processing of the audio signal by the second terminal, and rendering calibration of an initial rendering processing result by the first terminal; or decoding and initial rendering processing of the audio signal by the service device, correction of an initial rendering processing result by the second terminal, and rendering calibration of corrected data by the first terminal.

In some possible implementations, the transceiver module 1101 is further configured to, in a case that the first terminal is directly connected to the service device and the current audio signal processing mode does not include the second terminal, send the first data to the first terminal; or, in a case that the first terminal is connected to the service device via the second terminal, send the first data to the second terminal; or, in a case that the current audio signal processing mode includes the second terminal, send the first data to the second terminal.

In some possible implementations, the transceiver module 1101 is further configured to receive a motion parameter sent by the first terminal, in which the motion parameter is obtained by a head tracker device in the first terminal; and the processing module 1102 is further configured to obtain the first data by performing decoding and rendering processing on the audio signal with the motion parameter based on the current audio signal processing mode.

In some possible implementations, the motion parameter includes at least one of: a rotation rate, a position coordinate, or a movement rate.

In summary, the service device first obtains the current audio signal processing mode determined based on the at least one of the performance parameters of each device, the application scenario parameter, or the preset rule; then the service device obtains the first data by processing the audio signal based on the current audio signal processing mode and sends the first data to the first terminal or the second terminal. Thus, by adopting the audio signal processing mode that complies with the capability of the service device, the capability of the first terminal, the capability of the second terminal, and the scenario requirements, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

The communication apparatus 1100 may be a first terminal, an apparatus in the first terminal, or an apparatus that may be used in conjunction with the first terminal.

In the case that the communication apparatus 1100 is configured on the first terminal side, the transceiver module 1101 is configured to obtain a current audio signal processing mode, in which the current audio signal processing mode is determined based on at least one of a first performance parameter of the first terminal, a second performance parameter of a service device, a third performance parameter of a second terminal, an application scenario parameter of the first terminal, or a preset rule; and the first terminal is an audio playback device, the first terminal is connected to the service device via the second terminal, or the first terminal is directly connected to the service device.

The transceiver module 1101 is further configured to receive first data, in which the first data is obtained by processing a first audio signal by the service device and/or the second terminal based on the current audio signal processing mode.

The processing module 1102 is configured to obtain a second audio signal to be played by processing the first data based on the current audio signal processing mode.

The transceiver module 1101 is further configured to play the second audio signal.

In some possible implementations, the transceiver module 1101 is further configured to receive the current audio signal processing mode sent by the second terminal; or, receive the current audio signal processing mode sent by the service device.

In some possible implementations, the transceiver module 1101 is further configured to send the first performance parameter and the application scenario parameter of the first terminal to the second terminal or the service device.

In some possible implementations, the first performance parameter includes at least one of: CPU performance, memory space, hard disk space, or network resource capacity; the application scenario parameter includes at least one of: a movement rate of the first terminal, a degree of freedom of movement of the first terminal, or a rotation rate of the first terminal.

In some possible implementations, the processing module 1102 is further configured to, in a case that the current audio signal processing mode does not include the first terminal, obtain the second audio signal by performing decoding processing on the first data; or, in a case that the current audio signal processing mode indicates that decoding and rendering processing of the audio signal is performed by the first terminal, obtain the second audio signal by performing decoding and rendering processing on the first data based on a current motion parameter; or, in a case that the current audio signal processing mode indicates that rendering calibration of the audio signal is performed by the first terminal, obtain the second audio signal by performing rendering calibration on the first data based on a current motion parameter.

In some possible implementations, the transceiver module 1101 is further configured to obtain a motion parameter, in which the motion parameter is obtained by a head tracker device in the first terminal; and send the motion parameter to the service device and/or the second terminal.

In some possible implementations, the transceiver module 1101 is further configured to, in a case that the current audio signal processing mode indicates that the service device participates in decoding and rendering processing of the first audio signal, send the motion parameter to the service device; in a case that the current audio signal processing mode indicates that the second terminal participates in decoding and rendering processing of the first audio signal, send the motion parameter to the second terminal; and in a case that the current audio signal processing mode indicates that both the service device and the second terminal participate in rendering processing of the first audio signal, send motion parameters corresponding to different acquisition moments to the service device and the second terminal, respectively.

In some possible implementations, the motion parameter includes at least one of: a rotation rate, a position coordinate, or a movement rate.

In summary, the first terminal first obtains the current audio signal processing mode determined based on the at least one of the performance parameters of each device, the application scenario parameter, or the preset rule; then the first terminal obtains the second audio signal by processing the first data based on the current audio signal processing mode and plays the second audio signal. Thus, by adopting the audio signal processing mode that complies with the capability of the service device, the capability of the first terminal, the capability of the second terminal, and the scenario requirements, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

The communication apparatus 1100 may be a second terminal, an apparatus in the second terminal, or an apparatus that may be used in conjunction with the second terminal.

In the case that the communication apparatus 1100 is configured on the second terminal side, the transceiver module 1101 is configured to obtain a current audio signal processing mode, in which the current audio signal processing mode is determined based on at least one of a first performance parameter of a first terminal, a second performance parameter of a service device, a third performance parameter of the second terminal, an application scenario parameter of the first terminal, or a preset rule; and the first terminal is an audio playback device, the first terminal is connected to the service device via the second terminal, or the first terminal is directly connected to the service device.

In some possible implementations, the transceiver module 1101 is further configured to receive the current audio signal processing mode sent by the service device; or, the processing module 1102 is configured to determine the current audio signal processing mode based on at least one of the first performance parameter, the second performance parameter, the third performance parameter, the application scenario parameter, or the preset rule.

In some possible implementations, the first performance parameter, the second performance parameter, and the third performance parameter each include at least one of: CPU performance, memory space, hard disk space, or network resource capacity; the application scenario parameter includes at least one of: a movement rate of the first terminal, a degree of freedom of movement of the first terminal, or a rotation rate of the first terminal.

In some possible implementations, the transceiver module 1101 is further configured to send the current audio signal processing mode to the first terminal and the service device, respectively.

In some possible implementations, the transceiver module 1101 is further configured to receive the first performance parameter and the application scenario parameter sent by the first terminal; and/or, receive the second performance parameter sent by the service device.

In some possible implementations, the processing module 1102 is further configured to, in a case that the preset rule is not empty, determine a processing mode indicated in the preset rule as the current audio signal processing mode; or, in a case that the preset rule is empty, determine a first ratio between processing loads carried in each device under each candidate processing mode, and a second ratio between the first performance parameter, the second performance parameter and the third performance parameter of the second terminal; and determine a candidate processing mode corresponding to a first ratio mostly correlated with the second ratio as the current audio signal processing mode.

In some possible implementations, the candidate processing mode includes each of: decoding and rendering processing of the audio signal by the service device; decoding and rendering processing of the audio signal by the first terminal; decoding and rendering processing of the audio signal by the second terminal; decoding and initial rendering processing of the audio signal by the service device, and rendering calibration of an initial rendering processing result by the first terminal; decoding and initial rendering processing of the audio signal by the service device, and rendering calibration of an initial rendering processing result by the second terminal; decoding and initial rendering processing of the audio signal by the second terminal, and rendering calibration of an initial rendering processing result by the first terminal; or decoding and initial rendering processing of the audio signal by the service device, correction of an initial rendering processing result by the second terminal, and rendering calibration of corrected data by the first terminal.

In some possible implementations, the transceiver module 1101 is further configured to receive first data sent by the service device, in which the first data is obtained by processing a first audio signal by the service device based on the current audio signal processing mode; and receive a motion parameter sent by the first terminal. The processing module 1102 is further configured to obtain rendered data by performing the rendering processing on the first data with the motion parameter based on the current audio signal processing mode. The transceiver module 1101 is further configured to send the corrected data to the first terminal.

In some possible implementations, the motion parameter includes at least one of: a rotation rate, a position coordinate, or a movement rate.

In summary, by using the current audio signal processing mode determined based on at least one of the performance parameters of each device, the application scenario parameter, or the preset rule, when performing the current audio signal processing based on the current audio signal processing mode, not only the delay from the user head rotation and/or the position movement detected by the head tracker device in the XR device to the user perceived change in the audio service may be minimized, but also the allocation among all devices during a function processing procedure required for the XR device to provide the XR audio service may be balanced.

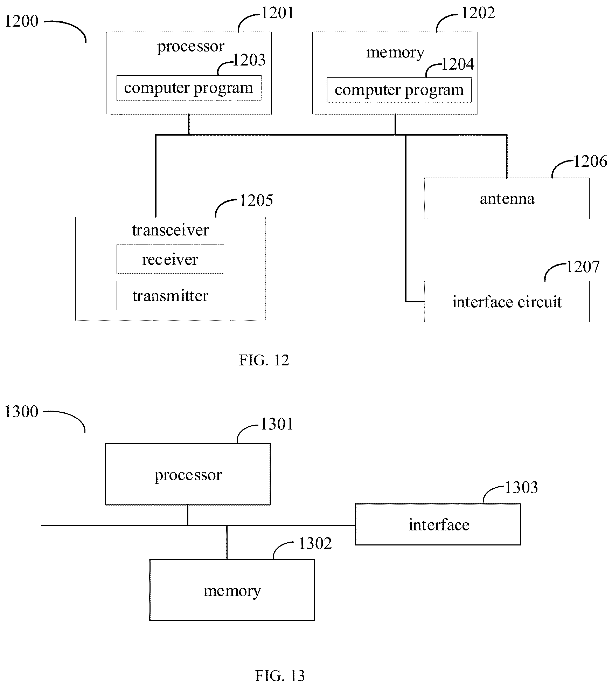

Referring to FIG. 12, it is a block diagram illustrating another communication device 1200 according to an embodiment of the disclosure. The communication device 1200 may be a terminal, a network device, a chip, a system on chip or a processor that supports the terminal to implement the above method, or a chip, a system on chip or a processor that supports the network device to implement the above method. The communication device 1200 may be configured to implement the methods described in the method embodiments, which may refer to descriptions in the method embodiments.

The communication device 1200 may include one or more processors 1201. The processor 1201 may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a terminal, a terminal chip, a DU, or CU, etc.), to execute a computer program, and process data of the computer program.

In some possible implementations, the communication device 1200 may further include one or more memories 1202 with a computer program 1204 stored. The computer program 1204 is executed by the processor 1201, so that the communication device 1200 performs the method as described in the above method embodiments. In some possible implementations, the memory 1202 may further store data. The communication device 1200 and the memory 1202 may be independently configured or integrated together.

In some possible implementations, the communication device 1200 may further include a transceiver 1205 and an antenna 1206. The transceiver 1205 may be referred to as a transceiving unit, a transceiving machine or a transceiving circuit, which may be configured to achieve a transceiving function. The transceiver 1205 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

In some possible implementations, the communication device 1200 may further include one or more interface circuits 1207. The interface circuit 1207 is configured to receive code instructions and transmit the code instructions to the processor 1201. The code instructions are executed by the processor 1201 so that the communication device 1200 performs the method as described in the above method embodiments.

In some possible implementations, the processor 1201 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In some possible implementations, the processor 1201 may include a computer program 1203. The computer program 1203 is executed by the processor 1201 so that the communication device 1200 performs the method as described in the above method embodiments. The computer program 1203 may be solidified in the processor 1201, in which case the processor 1201 may be implemented by hardware.

In some possible implementations, the communication device 1200 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a terminal, but the scope of the communication device described in the disclosure is not limited, and a structure of the communication device may not be limited by FIG. 12. The communication device may be a stand-alone device or may be a part of a larger device. For example, the communication device may be the following:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal device, a cellular phone, a wireless device, a handset, a mobile unit, a vehicle-mounted device, a network side device, a cloud device, an artificial intelligence device, etc.;
(6) others, and so forth.

In the case that the communication device may be a chip or a system on chip, a block diagram of a chip shown in FIG. 13 may be referred. FIG. 13 is a block diagram illustrating a chip according to an embodiment of the disclosure.

The chip 1300 includes a processor 1301 and an interface 1303. There may be one or more processors 1301 and there may be a plurality of interfaces 1303.

In some possible implementations, the chip 1300 further includes a memory 1302, configured to save necessary computer program and data.

Those skilled in the related art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

An embodiment of the disclosure further provides a communication system. The system includes the communication apparatus functioning as the service device, the communication apparatus functioning as the first terminal, or the communication apparatus functioning as the second terminal in the aforementioned embodiment of FIG. 11, or the system includes the communication apparatus functioning as the service device, the communication apparatus functioning as the first terminal, or the communication apparatus functioning as the second terminal in the aforementioned embodiment of FIG. 12.

A readable storage medium with instructions stored is further provided in the disclosure. When the instructions are executed by a computer, steps in any one method embodiment are implemented.

A computer program product is further provided in the disclosure. The computer program product implements functions of any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk, and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, but not intended to limit the scope of the embodiments of the disclosure, not to indicate an order of precedence.

The phase "at least one" in the disclosure may also be described as one or more, and the phase "a plurality of" may refer to two, three, four or more. The term "and/or" describes an association relationship of associated objects, indicating that there may be three types of relationships. For example, A and/or B may indicate: A exists alone, A and B exist simultaneously, or B exists alone, where A and B may be singular or plural. The character "/" generally indicates that the associated objects before and after are in an "or" relationship. The term "at least one" or similar expressions refer to any combination of these items, including a single item or a combination of a plurality of items. For example, "at least one of A, B, and C" may represent: just A, just B, just C, both A and B, both A and C, both B and C, or all three of A, B and C, in which A, B, and C may be single or multiple, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by the hardware or the software depends on a specific application and a design constraint of the technical solution. Those skilled in the art may adopt different methods for each specific application to implement the described functions, but such implementation should not be considered as going beyond the scope of the disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for processing an audio signal, performed by a service device, comprising:
obtaining a current audio signal processing mode, wherein the current audio signal processing mode is determined based on at least one of a first performance parameter of a first terminal, a second performance parameter of the service device, a third performance parameter of a second terminal, an application scenario parameter of the first terminal, or a preset rule;
obtaining first data by processing an audio signal based on the current audio signal processing mode; and
sending the first data to the first terminal or the second terminal, wherein the first terminal is an audio playback device, the first terminal is connected to the service device via the second terminal, or the first terminal is directly connected to the service device.

2. The method according to claim 1, wherein obtaining the current audio signal processing mode comprises:
receiving the current audio signal processing mode sent by the second terminal; or,
determining the current audio signal processing mode based on at least one of the first performance parameter, the second performance parameter, the third performance parameter, the application scenario parameter, or the preset rule.

3. The method according to claim 2, wherein
each of the first performance parameter, the second performance parameter, or the third performance parameter comprises at least one of: central processor unit (CPU) performance, memory space, hard disk space, or network resource capacity;
the application scenario parameter comprises at least one of: a movement rate of the first terminal, a degree of freedom of movement of the first terminal, or a rotation rate of the first terminal.

4. The method according to claim 2, wherein after determining the current audio signal processing mode, the method further comprises:
sending the current audio signal processing mode to the first terminal and the second terminal, respectively.

5. The method according to claim 2, further comprising:
receiving the first performance parameter and the application scenario parameter sent by the first terminal; and/or,
receiving the third performance parameter sent by the second terminal.

6. The method according to claim 2, wherein determining the current audio signal processing mode based on at least one of the first performance parameter, the second performance parameter, the third performance parameter, the application scenario parameter, or the preset rule comprises:
in a case that the preset rule is not empty, determining a processing mode indicated in the preset rule as the current audio signal processing mode; or,
in a case that the preset rule is empty, determining a first ratio between processing loads carried by each device in each candidate processing mode, and a second ratio between the first performance parameter, the second performance parameter and the third performance parameter of the second terminal; and determining a candidate processing mode corresponding to a first ratio mostly correlated with the second ratio as the current audio signal processing mode.

7. The method according to claim 6, wherein the candidate processing mode comprises each of:
decoding and rendering processing of the audio signal by the service device;
decoding and rendering processing of the audio signal by the first terminal;
decoding and rendering processing of the audio signal by the second terminal;
decoding and initial rendering processing of the audio signal by the service device, and rendering calibration of an initial rendering processing result by the first terminal;
decoding and initial rendering processing of the audio signal by the service device, and rendering calibration of an initial rendering processing result by the second terminal;
decoding and initial rendering processing of the audio signal by the second terminal, and rendering calibration of an initial rendering processing result by the first terminal; or
decoding and initial rendering processing of the audio signal by the service device, correction of an initial rendering processing result by the second terminal, and rendering calibration of corrected data by the first terminal.

8. The method according to claim 7, wherein sending the first data to the first terminal or the second terminal comprises:
in a case that the first terminal is directly connected to the service device and the current audio signal processing mode does not comprise the second terminal, sending the first data to the first terminal; or,
in a case that the first terminal is connected to the service device via the second terminal, sending the first data to the second terminal; or,
in a case that the current audio signal processing mode comprises the second terminal, sending the first data to the second terminal.

9. The method according to any one of claims 1 to 8, wherein obtaining the first data by processing the audio signal based on the current audio signal processing mode comprises:
receiving a motion parameter sent by the first terminal, wherein the motion parameter is obtained by a head tracker device in the first terminal; and
obtaining the first data by performing decoding and rendering processing on the audio signal with the motion parameter based on the current audio signal processing mode.

10. The method according to claim 9, wherein the motion parameter comprises at least one of: a rotation rate, a position coordinate, or a movement rate.

11. A method for processing an audio signal, performed by a first terminal, comprising:
obtaining a current audio signal processing mode, wherein the current audio signal processing mode is determined based on at least one of a first performance parameter of the first terminal, a second performance parameter of a service device, a third performance parameter of a second terminal, an application scenario parameter of the first terminal, or a preset rule; and the first terminal is an audio playback device, the first terminal is connected to the service device via the second terminal, or the first terminal is directly connected to the service device;
receiving first data, wherein the first data is obtained by processing a first audio signal by the service device and/or the second terminal based on the current audio signal processing mode;
obtaining a second audio signal to be played by processing the first data based on the current audio signal processing mode; and
playing the second audio signal.

12. The method according to claim 11, wherein obtaining the current audio signal processing mode comprises:
receiving the current audio signal processing mode sent by the second terminal; or,
receiving the current audio signal processing mode sent by the service device.

13. The method according to claim 12, further comprising:
sending the first performance parameter and the application scenario parameter of the first terminal to the second terminal or the service device.

14. The method according to claim 13, wherein
the first performance parameter comprises at least one of: central processor unit (CPU) performance, memory space, hard disk space, or network resource capacity;
the application scenario parameter comprises at least one of: a movement rate of the first terminal, a degree of freedom of movement of the first terminal, or a rotation rate of the first terminal.

15. The method according to any one of claims 11 to 14, wherein obtaining the second audio signal to be played by processing the first data based on the current audio signal processing mode comprises:
in a case that the current audio signal processing mode does not comprise the first terminal, obtaining the second audio signal by performing decoding processing on the first data; or,
in a case that the current audio signal processing mode indicates that decoding and rendering processing of the audio signal is performed by the first terminal, obtaining the second audio signal by performing decoding and rendering processing on the first data based on a current motion parameter; or,
in a case that the current audio signal processing mode indicates that rendering calibration of the audio signal is performed by the first terminal, obtaining the second audio signal by performing rendering calibration on the first data based on a current motion parameter.

16. The method according to claim 15, further comprising:
obtaining a motion parameter, wherein the motion parameter is obtained by a head tracker device in the first terminal; and
sending the motion parameter to the service device and/or the second terminal.

17. The method according to claim 16, wherein sending the motion parameter to the service device and/or the second terminal comprises:
in a case that the current audio signal processing mode indicates that the service device participates in decoding and rendering processing of the first audio signal, sending the motion parameter to the service device;
in a case that the current audio signal processing mode indicates that the second terminal participates in decoding and rendering processing of the first audio signal, sending the motion parameter to the second terminal; and
in a case that the current audio signal processing mode indicates that both the service device and the second terminal participate in rendering processing of the first audio signal, sending motion parameters corresponding to different acquisition moments to the service device and the second terminal, respectively.

18. The method according to claim 16, wherein the motion parameter comprises at least one of: a rotation rate, a position coordinate, or a movement rate.

19. A method for processing an audio signal, performed by a second terminal, comprising:
obtaining a current audio signal processing mode, wherein the current audio signal processing mode is determined based on at least one of a first performance parameter of a first terminal, a second performance parameter of a service device, a third performance parameter of the second terminal, an application scenario parameter of the first terminal, or a preset rule; and the first terminal is an audio playback device, the first terminal is connected to the service device via the second terminal, or the first terminal is directly connected to the service device.

20. The method according to claim 19, wherein obtaining the current audio signal processing mode comprises:
receiving the current audio signal processing mode sent by the service device; or,
determining the current audio signal processing mode based on at least one of the first performance parameter, the second performance parameter, the third performance parameter, the application scenario parameter, or the preset rule.

21. The method according to claim 20, wherein
each of the first performance parameter, the second performance parameter, and the third performance parameter comprises at least one of: central processor unit (CPU) performance, memory space, hard disk space, or network resource capacity;
the application scenario parameter comprises at least one of: a movement rate of the first terminal, a degree of freedom of movement of the first terminal, or a rotation rate of the first terminal.

22. The method according to claim 20, wherein after determining the current audio signal processing mode, the method further comprises:
sending the current audio signal processing mode to the first terminal and the service device, respectively.

23. The method according to claim 22, further comprising:
receiving the first performance parameter and the application scenario parameter sent by the first terminal; and/or,
receiving the second performance parameter sent by the service device.

24. The method according to any one of claims 20 to 23, wherein determining the current audio signal processing mode based on at least one of the first performance parameter, the second performance parameter, the third performance parameter, the application scenario parameter, or the preset rule comprises:
in a case that the preset rule is not empty, determining a processing mode indicated in the preset rule as the current audio signal processing mode; or,
in a case that the preset rule is empty, determining a first ratio between processing loads carried in each device under each candidate processing mode, and a second ratio between the first performance parameter, the second performance parameter and the third performance parameter of the second terminal; and determining a candidate processing mode corresponding to a first ratio mostly correlated with the second ratio as the current audio signal processing mode.

25. The method according to claim 24, wherein the candidate processing mode comprises each of:
decoding and rendering processing of the audio signal by the service device;
decoding and rendering processing of the audio signal by the first terminal;
decoding and rendering processing of the audio signal by the second terminal;
decoding and initial rendering processing of the audio signal by the service device, and rendering calibration of an initial rendering processing result by the first terminal;
decoding and initial rendering processing of the audio signal by the service device, and rendering calibration of an initial rendering processing result by the second terminal;
decoding and initial rendering processing of the audio signal by the second terminal, and rendering calibration of an initial rendering processing result by the first terminal; or
decoding and initial rendering processing of the audio signal by the service device, correction of an initial rendering processing result by the second terminal, and rendering calibration of corrected data by the first terminal.

26. The method according to claim 25, further comprising:
receiving first data sent by the service device, wherein the first data is obtained by processing a first audio signal by the service device based on the current audio signal processing mode;
receiving a motion parameter sent by the first terminal;
obtaining rendered data by performing the rendering processing on the first data with the motion parameter based on the current audio signal processing mode; and
sending the corrected data to the first terminal.

27. The method according to claim 26, wherein the motion parameter comprises at least one of: a rotation rate, a position coordinate, or a movement rate.

28. A service device, comprising:
a transceiver module, configured to obtain a current audio signal processing mode, wherein the current audio signal processing mode is determined based on at least one of a first performance parameter of a first terminal, a second performance parameter of the service device, a third performance parameter of a second terminal, an application scenario parameter of the first terminal, or a preset rule; and
a processing module, configured to obtain first data by processing an audio signal based on the current audio signal processing mode;
wherein the transceiver module is further configured to send the first data to the first terminal or the second terminal, and the first terminal is an audio playback device, the first terminal is connected to the service device via the second terminal, or the first terminal is directly connected to the service device.

29. A first terminal, comprising:
a transceiver module, configured to obtain a current audio signal processing mode, wherein the current audio signal processing mode is determined based on at least one of a first performance parameter of the first terminal, a second performance parameter of a service device, a third performance parameter of a second terminal, an application scenario parameter of the first terminal, or a preset rule; and the first terminal is an audio playback device, the first terminal is connected to the service device via the second terminal, or the first terminal is directly connected to the service device;
wherein the transceiver module is further configured to receive first data, and the first data is obtained by processing a first audio signal by the service device and/or the second terminal based on the current audio signal processing mode; and
a processing module, configured to obtain a second audio signal to be played by processing the first data based on the current audio signal processing mode;
wherein the transceiver module is further configured to play the second audio signal.

30. A second terminal, comprising:
a transceiver module, configured to obtain a current audio signal processing mode, wherein the current audio signal processing mode is determined based on at least one of a first performance parameter of a first terminal, a second performance parameter of a service device, a third performance parameter of the second terminal, an application scenario parameter of the first terminal, or a preset rule; and the first terminal is an audio playback device, the first terminal is connected to the service device via the second terminal, or the first terminal is directly connected to the service device.

31. A communication device, comprising a processor and a memory storing a computer program that, when executed by the processor, causes the communication device to implement the method according to any one of claims 1 to 10, the method according to any one of claims 11 to 18, or the method according to any one of claims 19 to 27.

32. A communication device, comprising: a processor and an interface circuit; wherein
the interface circuit is configured to receive code instructions and transmit the code instructions to the processor; and
the processor is configured to execute the code instructions to implement the method according to any one of claims 1 to 10, the method according to any one of claims 11 to 18, or the method according to any one of claims 19 to 27.

33. A communication system, comprising:
a service device, configured to implement the method according to any one of claims 1 to 10,
a first terminal, configured to the method according to any one of claims 11 to 18, and
a second terminal, configured to the method according to any one of claims 19 to 27.

34. A computer-readable storage medium storing instructions that, when executed, cause the method according to any one of claims 1 to 10, the method according to any one of claims 11 to 18, or the method according to any one of claims 19 to 27 to be implemented.
